# EUROPÄISCHE PATENTSCHRIFT

(11) **EP 1 446 349 B1**
(45) Veröffentlichungstag und Bekanntmachung des Hinweises auf die Patenterteilung: **27.04.2005**
(21) Anmeldenummer: 02769839.8
(22) Anmeldetag: 07.11.2002
(51) Int. Cl.: B66B 9/04

(54) **HYDRAULISCHER AUFZUG MIT EINEM DRUCKSPEICHER SOWIE VERFAHREN ZUR STEUERUNG UND REGELUNG EINES SOLCHEN AUFZUGS**
HYDRAULIC LIFT COMPRISING A PRESSURE ACCUMULATOR AND METHOD FOR CONTROLLING AND REGULATING ONE SUCH LIFT
ASCENSEUR HYDRAULIQUE EQUIPE D'UN ACCUMULATEUR DE PRESSION ET SON PROCEDE DE COMMANDE ET DE REGLAGE

(30) Priorität: 23.11.2001 CH 216201
(43) Veröffentlichungstag der Anmeldung: 18.08.2004
(73) Patentinhaber: Bucher Hydraulics AG, 6345 Neuheim/Zug (CH)
(72) Erfinder: MOSER, Daniel, CH-6313 Menzingen (CH); VON HOLZEN, Richard, CH-6313 Menzingen (CH)
(74) Vertreter: Müller, Frank Peter, Dipl.-Ing.
(86) Internationale Anmeldenummer: PCT/CH2002/000600
(87) Internationale Veröffentlichungsnummer: WO 2003/043923

(56) Entgegenhaltungen:
- WO-A-01/14238

## Beschreibung

Die Erfindung bezieht sich auf einen hydraulischen Aufzug der im Oberbegriff des Anspruchs 1 genannten Art sowie auf ein Verfahren zur Steuerung und Regelung eines solchen Aufzugs gemäß dem Oberbegriff des Anspruchs 7.

Ein hydraulischer Aufzug ist aus der WO-A1-01/14238 bekannt. Von und zum hydraulischen Antrieb für den Aufzug ist Hydrauliköl mittels einer ersten Pumpe förderbar, während von und zum Druckspeicher das Hydrauliköl mittels einer zweiten Pumpe förderbar ist. Die beiden Pumpen sind starr miteinander verbunden und mittels eines elektrischen Motors, dessen Drehzahl regelbar ist, gemeinsam antreibbar. Zwischen der einen Pumpe und dem hydraulischen Antrieb ist ein vorsteuerbares Ventil angeordnet, mit dem bei Abwärtsfahrt der Kabine die Geschindwigkeit der Kabine jeweils dann geregelt wird, wenn diese unterhalb eines vorbestimmten Wertes liegt.

Ein hydraulischer Aufzug der im Oberbegiff des Anspruchs 1 genannten Art ist aus DE-A1-40 34 666 bekannt. Zwischen dem hydraulischen Antrieb für die Aufzugskabine und dem in dieser Schrift Ausgleichsaufzug genannten Druckspeicher wird mittels einer Pumpe Hydrauliköl gefördert. In den Leitungen von der Pumpe zum Antrieb und von der Pumpe zum Druckspeicher ist je ein Geschwindigkeits-Einstellventil angeordnet, mit denen die Fahrkurve gesteuert werden kann. Offenbart ist weiter, daß die Pumpe von einem elektrischen Motor angetrieben wird, der von einem Inverter angesteuert wird.

In EP-A1-829 445 ist eine Vorrichtung gezeigt, bei der unter bestimmten Bedingungen der mit der Pumpe gekoppelte Motor als Generator wirkt, so daß überschüssige hydraulischer Energie in elektrische Energie umgewandelt, also zurückgewonnen werden kann.

Aus US-A-5,281,774 ist eine Steuereinrichtung für einen hydraulischen Aufzug bekannt, bei der der die Pumpe antreibende elektrische Motor mit einem Inverter gesteuert wird.

Ein hydraulischer Aufzug mit einem Druckspeicher ist auch aus US-A-5,579,868 bekannt. Bei diesem Aufzug ist bei einer der Ausgestaltungen zwischen den hydraulischen Antrieb für den Aufzug und den Druckspeicher eine erste Pumpe geschaltet, mit der der Fluß des Hydrauliköls zwischen dem hydraulischen Antrieb und dem Druckspeicher beeinflußbar wird. Mit der ersten Pumpe ist ein Hydromotor gekoppelt, durch den ein regelbarer Teilstrom des Hydrauliköls zum Tank fließt, wobei aus der Druckdifferenz beim Entspannen des Hydrauliköls vom hydraulischen Antrieb bzw. Druckspeicher zum drucklosen Tank Energie gewonnen wird, die beim Betrieb der ersten Pumpe ausgenutzt wird. Mittels einer zweiten Pumpe ist Hydrauliköl vom Tank zum Druckspeicher förderbar, um den Druckspeicher immer wieder aufzuladen.

Aus WO 98/34868 ist es bekannt, die Pumpe zum Fördern von Hydrauliköl bei einem hydraulischen Aufzug durch einen elektronischen Leistungssteller zu betreiben. Solche Leistungssteller sind unter dem Begriff Frequenzumrichter bekannt.

Aus WO 99/3370 ist eine weitere Vorrichtung zum Betrieb eines hydraulischen Aufzugs bekannt. Hier sind zwischen dem hydraulischen Antrieb und dem Druckspeicher eine Pumpe und vier Leitungszweige mit je einem elektrisch ansteuerbaren Ventil angeordnet. Bei Aufwärtsfahrt müssen zwei der Ventile geöffnet werden und bei Abwärtsfahrt zwei andere Ventile. Der Druckspeicher weist offenbar drei Druckräume auf, was aus der die Priorität begründenden Anmeldung FR-A-2 773 141 deutlicher ersichtlich wird. Unklar bleibt, wie die Geschwindigkeit geregelt wird. Es ist anzunehmen, daß beim Schalten der vier elektrisch steuerbaren Ventile erhebliche Druckstöße auftreten.

Der Erfindung liegt die Aufgabe zugrunde, die hydraulische Schaltung zu vereinfachen und den Bedarf an elektrischer Energie, insbesondere den Spitzenbedarf, also die elektrische Anschlußleistung, zu senken, sowie ein Steuer- und Regelverfahren anzugeben, das einen energiesparenden und gleichzeitig komfortablen Betrieb eines solchen Aufzugs ermöglicht.

Die genannte Aufgabe wird erfindungsgemäß durch die Merkmale der Ansprüche 1 bzw. 7 gelöst. Vorteilhafte Ausgestaltungen ergeben sich aus den abhängigen Ansprüchen.

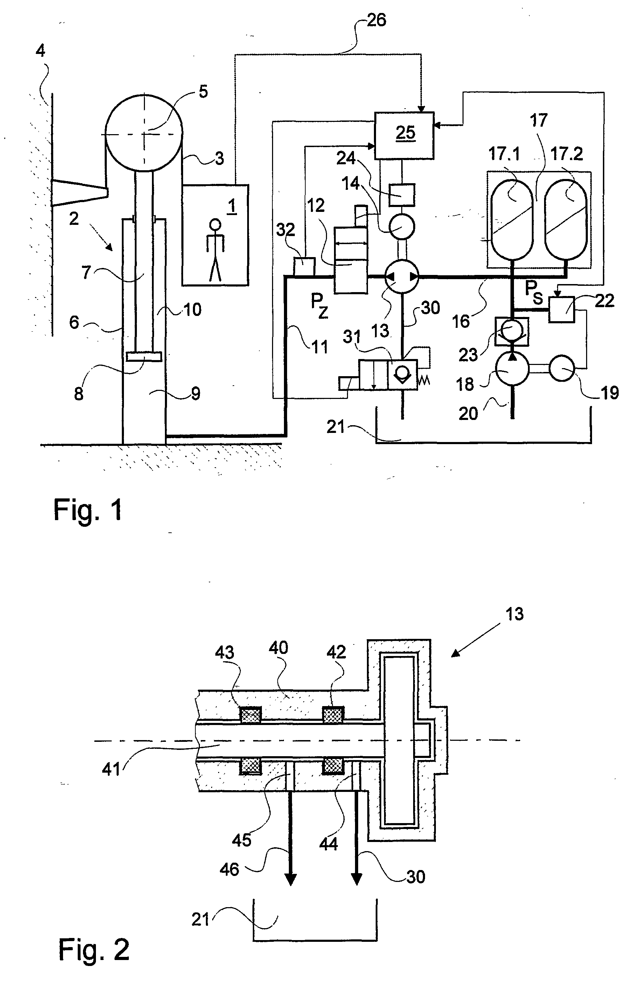

Nachfolgend werden Ausführungsbeispiele der Erfindung anhand der Zeichnung näher erläutert.
- Es zeigen: Fig. 1: ein Schema eines hydraulischen Aufzugs,
- Fig. 2: ein Schema einer Pumpenbauart und,
- Fig. 3a bis 3c: alternative Ausgestaltungen eines Zylinderleitungs-Absperrventils.

In der Fig. 1 ist mit der Bezugszahl 1 eine Aufzugskabine bezeichnet, die von einem hydraulischen Antrieb 2 bewegbar ist. Die Kraftübertragung vom hydraulischen Antrieb 2 auf die Kabine 1 erfolgt in bekannter Weise mittels eines Seiles 3, das über eine am hydraulischen Antrieb 2 befestigte Rolle 5 umgelenkt wird. Das eine Ende des Seiles 3 ist an einem Gebäudeteil 4 befestigt, kann aber auch an den nicht dargestellten Führungsschienen für die Aufzugskabine 1 befestigt sein. Bekannte abweichende Anordnungen von Seil 3 und Rollen 5 sind im Rahmen der Erfindung möglich. Diesbezüglich zeigt die Fig. 1 lediglich ein Beispiel. Auch der direkte Antrieb der Kabine 1 durch den hydraulischen Antrieb, wie in WO 98/34868 gezeigt; ist möglich.

Der hydraulische Antrieb 2 besteht aus einem Zylinder 6, in dem ein an einer Kolbenstange 7 befestigter Kolben 8 bewegbar ist. Das dem Kolben 8 gegenüber liegende Ende der Kolbenstange 7 trägt die Rolle 5. Der Innenraum des Zylinders 6 wird durch den Kolben 8 unterteilt in einen ersten Druckraum 9 und einen zweiten Druckraum 10. Der Antrieb 2 des dargestellten Ausfübrungsbeispiels ist ein sogenannter Plungerzylinder, bei dem die beiden Druckräume 9 und 10 verbunden sind. Am Kolben 8 ist also keine Dichtung gegen die Innenwand des Zylinders 6 vorhanden. An der Stelle, wo die Kolbenstange 7 aus dem hydraulischen Antrieb 2 heraustritt, befindet sich eine Dichtung, so daß der Druckraum 10 abgedichtet ist. Bei dieser Zylinderbauart entspricht der hydraulisch wirksame Querschnitt dem Querschnitt der Kolbenstange 7.

An den ersten Druckraum 9 ist eine Zylinderleitung 11 angeschlossen, die diesen Druckraum 9 mit einem Zylinderleitungs-Absperrventil 12 verbindet. Dieses Zylinderleitungs-Absperrventil 12 ist ein elektrisch ansteuerbares AUF-ZU-Ventil, also beispielsweise ein Magnetventil. Das Zylinderleitungs-Absperrventil 12 ist andererseits mit einer Pumpe 13 verbunden, die von einem elektrischen Motor 14 angetrieben wird. Am anderen Anschluß der Pumpe 13 ist unmittelbar eine Speicherleitung 16 angeschlossen, die zu einem Druckspeicher 17 führt, der aus mindestens einem Druckspeicher 17.1 besteht. Dargestellt ist ein weiterer Druckspeicher 17.2, der parallel zum ersten Druckspeicher 17.1 angeschlossen ist. Die Zahl der im Druckspeicher 17 enthaltenen Druckspeicher 17.1, 17.2, 17.n richtet sich in vorteilhafter Weise beispielsweise nach dem benötigten Speichervolumen, das mit dem von der Kabine 1 zurückzulegenden maximalen Weg zusammenhängt. Je größer der maximal mögliche Weg ist, desto mehr Druckspeicher 17.1, 17.2, 17.n sind im Druckspeicher 17 enthalten. Als Druckspeicher 17 kommen sowohl Blasenspeicher als auch Kolbenspeicher in Betracht.

Ein Zweig der Speicherleitung 16 führt zu einer Ladepumpe 18, die vom einem Elektromotor 19 angetrieben wird. Die Ladepumpe 18 ist außerdem über eine Tankleitung 20 mit einem Tank 21 verbunden. Mittels der Ladepumpe 18 ist Hydrauliköl vom Tank 21 in den Druckspeicher 17 förderbar. Vorteilhaft wird der die Ladepumpe 18 antreibende Elektromotor 19 durch einen Druckschalter 22 automatisch gesteuert. Der Druckschalter 22 liegt an der Speicherleitung 16 an, erfaßt also deren Druck, der mit P_{S} bezeichnet ist. Sinkt der Druck P_{S} unter einen vorgegebenen unteren Wert, so schaltet der Druckschalter 22 den Elektromotor 19 ein, so daß dann die Ladepumpe 18 Hydrauliköl vom Tank 21 in den Druckspeicher 17 fördert, wodurch der Druck P_{S} so lange erhöht wird, bis der Druck P_{S} einen vorgegebenen oberen Wert erreicht, wonach dann die Ladepumpe 18 wieder ausgeschaltet wird. Die Ladepumpe 18 muß also nur dann laufen, wenn der Druck P_{S} im Druckspeicher 17 zu klein ist. Der Druck P_{S} kann einerseits wegen unvermeidlicher Leckverluste über die Ladepumpe 18 absinken, andererseits durch Absinken der Temperatur des Hydrauliköls durch Umgebungseinflüsse. Steigt durch solche Umgebungseinflüsse die Temperatur des Hydrauliköls an, so steigt der Druck P_{S} an. Da ein solcher Temperaturanstieg nie sehr schnell geschieht, wäre es aus diesem Grund nicht zwingend, zwischen dem Druckspeicher 17 und dem Tank 21 ein Überdruckventil vorzusehen, durch das Hydrauliköl bei steigendem Druck P_{S} in den Tank 20 abgelassen werden kann. Die Leckageverluste der Ladepumpe 18 reichen an sich aus, um den Druck P_{S} nicht zu stark ansteigen zu lassen. Gleichwohl kann aus Sicherheitsgründen ein solches Überdruckventil vorhanden sein. Vorteilhaft ist zwischen Ladepumpe 18 und Druckspeicher 17 ein Rückschlagventil 23 angeordnet. Durch dieses Rückschlagventil 23 wird ein Leckageverlust durch die Ladepumpe 18 verhindert. Dann ist das schon erwähnte Überdruckventil auf jeden Fall nötig. Nicht gezeichnet und beschrieben sind weitere sicherheitsrelevante Anlagenteile wie Rohrbruchsicherung und Notablaß, weil solche Elemente nicht relevant im Hinblick auf das Wesen der Erfindung sind.

Der Druckspeicher 17 ist, wie schon zuvor erwähnt, ein Blasen- oder ein Kolbenspeicher. Dessen Druck P_{S} ändert sich in Abhängigkeit von der Bewegung der Kabine 1. Für die Steuerung bzw. Regelung von Weg und Geschwindigkeit der Kabine 1 wirkt sich dies aber nicht nachteilig aus. Bei der Regelung von Weg und Geschwindigkeit der Kabine 1 wird in bekannter Weise beispielsweise das Signal eines in der Zylinderleitung 11 plazierten, hier nicht dargestellten Durchflußmessers berücksichtigt. Sie kann aber auch mittels eines Meßwertgebers für die Drehzahl des Motors 14 oder die Geschwindigkeit der Kabine 1 erfolgen.

Die vorgegebenen Werte, bei denen der Druckschalter 22 den Elektromotor 19 ein- bzw. ausschaltet, können vorteilhaft durch ein Steuer- und Regelgerät 25 veränderbar sein.

In der Zylinderleitung 11 herrscht ein Druck P_{Z}, der dem Druck im ersten Druckraum 9 des hydraulischen Antriebs 2 entspricht. Dieser Druck korreliert mit der Last der Kabine 1.

Weil erfindungsgemäß die Pumpe 13 zwischen der Zylinderleitung 11 und der Speicherleitung 16 angeordnet ist, wirkt dann, wenn sich beim Betrieb des Aufzugs das Zylinderleitungs-Absperrventil 12 in der Stellung "AUF" befindet, auf die Pumpe 13 einerseits unmittelbar der Druck P_{Z} in der Zylinderleitung 11 und somit im hydraulischen Antrieb 2 und andererseits unmittelbar der Druck P_{S} in der Speicherleitung 16 und somit im Druckspeicher 17. Gegenüber dem vorbekannten Stand der Technik ist also statt zweier Einstellventile zur Regelung der Geschwindigkeit nur das eine Zylinderleitungs-Absperrventil 12 erforderlich. Die hydraulische Schaltung ist also gegenüber diesem Stand der Technik deutlich vereinfacht. Die zum Betrieb der Pumpe 13 nötige elektrische Antriebsenergie für den die Pumpe 13 antreibenden Motor 14 korreliert demgemäß mit der Druckdifferenz P_{Z} - P_{S}, wenn die Pumpe 13 Hydrauliköl vom Druckspeicher 17 in den hydraulischen Antrieb 2 fördert, bzw. mit der Druckdifferenz P_{S} - P_{Z}, wenn die Pumpe 13 Hydrauliköl vom hydraulischen Antrieb 2 zum Druckspeicher 17 fördert. Die Druckdifferenz P_{S} - P_{Z} bzw. P_{Z} - P_{S} kann durchaus negativ sein, so daß dann die Pumpe 13 durch die Druckdifferenz ihrerseits angetrieben wird. Dadurch kann der Motor 14 als Generator wirken, wie dies schon bekannt ist. Damit eine solche Energierückgewinnung vorteilhaft möglich ist, wird der Motor 14 in bekannter Weise durch einen Leistungssteller 24 betrieben, der beispielsweise ein Frequenzumrichter ist. Der Leistungssteller 24 wird vom Steuer- und Regelgerät 25 angesteuert, welches seinerseits von einer nicht dargestellten Aufzugssteuerung Befehle erhält. Dargestellt ist lediglich eine Steuerleitung 26, über die die Befehle von den Bedientableaus der Aufzugsanlage an das Steuer- und Regelgerät 25 übermittelt werden.

Steht die Kabine 1 des Aufzugs still, so ist das Zylinderleitungs-Absperrventil 12, das vom Steuer- und Regelgerät 25 ansteuerbar ist, geschlossen.

Soll sich die Kabine 1 abwärts bewegen, so wird durch das Steuer- und Regelgerät 25 das Zylinderleitungs-Absperrventil 12 geöffnet und der Motor 14 in seiner ersten Drehrichtung betrieben, daß die Pumpe 13 Hydrauliköl vom Druckraum 9 in den Druckspeicher 17 fördert. Dabei wirkt über der Pumpe 13 die Druckdifferenz P_{S} - P_{Z}. Das bedeutet gleichzeitig, daß elektrische Energie für den Betrieb des Motors 14 nur so lange aufgewendet werden muß, solange der Druck P_{Z} kleiner ist als der Druck P_{S}. Weil ein Geschwindigkeits-Einstellventil verzichtbar ist, entsteht auch ein entsprechender Druckverlust nicht. Dies wirkt sich positiv auf den Gesamtwirkungsgrad aus, ermöglicht also einen energiesparenden Betrieb des Aufzugs.

Soll sich die Kabine 1 aufwärts bewegen, so wird durch das Steuer- und Regelgerät 25 das Zylinderleitungs-Absperrventil 12 ebenfalls geöffnet und der Motor 14 in seiner zweiten Drehrichtung betrieben, daß die Pumpe 13 Hydrauliköl vom Druckspeicher 17 in den Druckraum 9 fördert. Dabei wirkt über der Pumpe 13 die Druckdifferenz P_{Z} - P_{S}. Das bedeutet gleichzeitig, daß elektrische Energie für den Betrieb des Motors 14 nur so lange aufgewendet werden muß, solange der Druck P_{S} kleiner ist als der Druck P_{Z}.

Da grundsätzlich nur eine der jeweiligen Druckdifferenz P_{S} - P_{Z} bzw. P_{Z} - P_{S} entsprechende elektrische Antriebsleistung aufgewendet werden muß, kann der elektrische Anschlußwert für den Motor 14 sehr viel kleiner sein als bei herkömmlichen hydraulischen Schaltungen. Folglich ist auch der zum Betrieb der Pumpe 13 nötige Motor 14 auf eine kleinere Nennleistung auszulegen. Damit entstehen Kostenvorteile für den Motor 14 selbst, bei Anschlußwert-Tarifierung durch den kleineren Anschlußwert und bei Leistungs-Tarifierung durch den kleineren Verbrauch an elektrischer Energie. Es wird nach der Erfindung auch vermieden, daß einmal mittels einer Pumpe auf hohen Druck gebrachtes Hydrauliköl wieder in Richtung Tank 21 entspannt wird und dabei seine potentielle Energie abgibt bzw. verliert.

Vorteilhaft ist weiter, daß der Tank 21 klein bemessen sein kann. Er dient eigentlich nur dazu, eine Differenzmenge an Hydrauliköl aufzunehmen, die den Leckageverlusten entspricht. Diese Leckageverluste können durch eine Leckageleitung 30 in den Tank 21 abfließen. Gemäß einer bevorzugten Ausführung der Erfindung ist in dieser Leckageleitung 30 ein Leckage-Absperrventil 31 angeordnet, das ein vom Steuer- und Regelgerät 25 steuerbares Ventil ist und vorteilhaft als AUF-ZU-Ventil ausgebildet ist. Beim Stillstand des Aufzugs ist das Leckage-Absperrventil 31 geschlossen. Damit wird verhindert, daß sich der Druckspeicher 17 beim Stillstand des Aufzugs durch die Leckage der Pumpe 13 fortlaufend entlädt. Dieses Entladen würde einen erheblichen Energieverlust bedeuten. Dieser Energieverlust wird durch das Leckage-Absperrventil 31 verhindert.

Der Druck P_{Z} in der Zylinderleitung 11 ist mit Hilfe eines Lastdrucksensors 32 erfaßbar. Er wird an das Steuer- und Regelgerät 25 übermittelt. Der schon erwähnte Druckschalter 22 wertet den Druck P_{S} in der Speicherleitung 16 aus. Der Druckschalter 22 enthält auch die Funktionalität eines Drucksensors. Der so von ihm ermittelte Druck in der Speicherleitung 16 wird ebenfalls an das Steuer- und Regelgerät 25 übermittelt. Somit kennt das Steuer- und Regelgerät 25 die beiden Drücke P_{Z} und P_{S} und ist so in der Lage, diese Drücke bei der Steuerung bzw. Regelung des Aufzugs zu berücksichtigen, was noch ausgeführt werden wird.

Die erfindungsgemäße Lösung hat außerdem den bemerkenswerten Vorteil, daß zum Betrieb des hydraulischen Aufzugs kein proportional vorsteuerbares Ventil erforderlich ist. Bei vielen herkömmlichen hydraulischen Aufzugsanlagen sind getrennte vorsteuerbare Ventile für die Aufwärts- und die Abwärtsfahrt vorhanden. Dieser Aufwand wird durch die Erfindung vermieden. Die Steuer- bzw. Regelkette ist damit auch sehr einfach und übersichtlich, weil nur mittels eines einzigen Elements, nämlich mittels des Motors 14, die Geschwindigkeit der Kabine 1 gesteuert bzw. geregelt wird. Zwischen hydraulischem Antrieb 2 und Druckspeicher 17 ist außerdem nur ein einziges Ventil, nämlich das Zylinderleitungs-Absperventil 12 angeordnet. Beim Stand der Technik sind mindestens zwei Ventile vorhanden. Da grundsätzlich jedes Ventil auch im geöffneten Zustand einen Strömungswiderstand darstellt, der zu einem Druckverlust führt, ist es aus energetischer Sicht besonders vorteilhaft, wenn nur ein einziges Ventil nötig ist.

Es wurde erwähnt, daß beim Betrieb des Aufzugs, nämlich bei der Fahrt der Kabine 1, das Zylinderleitungs-Absperrventil 12 geöffnet sein muß. Soll also die Kabine 1 aus dem Stillstand bewegt werden, muß das Zylinderleitungs-Absperrventil 12 geöffnet werden. Diese Betriebssituation, also das Öffnen des Zylinderleitungs-Absperrventils 12, ist hinsichtlich der Druckverhältnisse kritisch und verlangt nach besonderen Maßnahmen zur Steuerung. Die Gründe dafür werden nachfolgend erläutert.

Beim Stillstand der Kabine 1 ist zunächst das Zylinderleitungs-Absperrventil 12 geschlossen. Am Zylinderleitungs-Absperrventil 12 liegt auf der dem Antrieb 2 zugewandten Seite der Druck P_{Z} an, auf der dem Druckspeicher 17 zugewandten Seite der Druck P_{S}. Nach einem längeren Stillstand der Kabine 1 hat sich eine zuvor vorhandene Druckdifferenz über der Pumpe 13 wegen der Leckverluste der Pumpe 13 abgebaut, so daß über ihr kein Druckabfall auftritt.

Daraus folgt nun, daß beim Öffnen des Zylinderleitungs-Absperrventils 12 schlagartige Druckänderungen dann auftreten, wenn die beiden Drücke P_{Z} und P_{S} nicht gleich sind. Diese schlagartige Druckänderung macht sich durch Geräusche unangenehm bemerkbar und belastet außerdem die Pumpe 13 ganz erheblich, was nachteilig für deren Betrieb und Lebensdauer sein kann. Diese Probleme sind offenbar, wie schon erwähnt, auch beim Gegenstand der WO-A-99/33740 vorhanden, wo insgesamt vier Ventile zu schalten sind. Durch das nachfolgend geschilderte Steuerungsverfahren werden die dadurch hervorgerufenen Probleme beseitigt und ein komfortabler Betrieb ermöglicht.

Das ist das eine der auftretenden Probleme bei dieser vorteilhaft einfachen hydraulischen Schaltung. Ein zweites Problem ist das folgende. Am dem Druckspeicher 17 zugewandten Anschluß der Pumpe 13 liegt immer der Druck P_{S} an, bei beispielsweise bis zu 150 bar betragen kann. Daraus ergibt sich zwangsläufig eine Leckage an der Pumpe 13. Diese Leckage besteht gegebenenfalls aus zwei Anteilen, nämlich der immer vorhandenen inneren Leckage vom einen Anschluß der Pumpe 13 zum anderen Anschluß und der von der Bauart der Pumpe 13 abhängigen äußeren Leckage, die, falls sie auftritt, durch die Leckageleitung 30 abgeführt werden muß.

Die innere Leckage hat beim Lauf der Pumpe 13 praktisch keine Bedeutung, weil sie sehr klein ist im Vergleich zur Förderleistung. Beim Stillstand der Pumpe 13 bei gleichzeitig geschlossenem Zylinderleitungs-Absperrventil 12 hat sie ebenfalls keine Bedeutung, weil sie nur dazu führt, daß auf der dem Zylinderleitungs-Absperrventil 12 zugewandten Seite der Pumpe 13 dadurch der Druck gleich dem Druck P_{S} wird. Wegen des geschlossenen Zylinderleitungs-Absperrventils 12 kann aber kein Hydrauliköl abfließen, wenn man von der minimalen Menge absieht, durch die der Druckausgleich zustandekommt.

Die äußere Leckage der Pumpe 13 ist aber sehr störend. Zum Wesen der Erfindung gehört es folglich, diese äußere Leckage entweder ganz zu verhindern oder sie durch besondere Mittel zu unterbinden. Tritt äußere Leckage an der Pumpe 13 wegen deren Bauart auf, würde durch sie sowohl während des Laufs der Pumpe 13 als auch bei deren Stillstand Hydrauliköl durch die Leckageleitung 30 abfließen. Dadurch würde sich also der Druckspeicher 17 fortlaufend entladen, so daß er mittels der Ladepumpe 18 immer wieder nachgeladen werden müßte. Das ist sehr ungünstig hinsichtlich des Energiebedarfs. Durch das nach einer vorteilhaften Ausgestaltung der Erfindung vorgesehene Leckage-Absperrventil 31 wird dies aber, wie schon erwähnt, verhindert.

Eine zweite vorteilhafte Ausführung der Erfindung besteht darin, als Pumpe 13 eine Schraubenspindelpumpe einzusetzen, der die Bezugszahl 13' zugeordnet ist, die aber in den Figuren nicht dargestellt ist. Wird eine Pumpe 13 solcher Bauart angewendet, so kann die Leckageleitung 30 entfallen, weil bei solchen Pumpen lediglich eine Leckage zwischen dem Hoch- und dem Niederdruckraum der Pumpe 13 auftritt.

Erfindungsgemäß sind also alternative Mittel vorgesehen, um die äußere Leckage zu verhindern, nämlich entweder die Anwendung einer leckfreien Schraubenspindelpumpe 13' oder die Unterbindung der Leckage durch das in die Leckageleitung 30 eingesetzte Leckage-Absperrventil 31.

Ist das bei Anwendung einer nicht leckagefreien Pumpe 13 vorgesehene Leckage-Absperrventil 31 geschlossen, herrscht im Innenraum der Pumpe 31 der Druck P_{S} des Druckspeichers 17. Das bedeutet, daß auf der Wellendichtung der Pumpe 31 dieser Druck lastet. Der Druck P_{S} im Druckspeicher 17 ist von der Bauart des hydraulischen Aufzugs abhängig. Aus energetischen Gründen ist es vorteilhaft, wenn der Druck P_{S} im Druckspeicher 17 so groß gewählt wird, daß er dem Druck P_{Z} in der Zylinderleitung 11 bei mit halber Nutzlast belasteter Kabine 1 entspricht. Die maximal von der Pumpe 13 aufzubringende Leistung korreliert deshalb mit der halben Nutzlast der Kabine 1.

Wie groß der Druck P_{Z} und damit auch der Druck P_{S} ist, hängt von Antriebsart der Kabine 1 und von der Bauart des hydraulischen Antriebs 2 ab. Wird die Kabine 1 vom hydraulischen Antrieb 2 direkt angetrieben, also ohne Übersetzung durch eine bestimmte Seilfizhrung, so ergibt sich der niedrigst mögliche Druck, der dann vom Eigengewicht der Kabine 1, von der Nutzlast und vom hydraulisch wirksamen Querschnitt des hydraulischen Antriebs 2 abhängt. Je größer der hydraulisch wirksamen Querschnitt des hydraulischen Antriebs 2 ist, desto kleiner ist der sich ergebende Druck P_{Z} und damit P_{S}. Bei einer Übersetzung von 2:1 bei einer in der Fig. 1 dargestellten Seilführung ist der Druck etwa doppelt so groß. Bei Übersetzungen 3:1, 4:1 usw. ergibt sich ein entsprechend höherer Druck.

Je nach Auslegung des hydraulischen Aufzugs ergibt sich also ein bestimmter Mittelwert der Drücke P_{Z} und P_{S}. Da der Druck P_{S} bei geschlossenem Leckage-Absperrventil 31 auf der Wellendichtung der Pumpe 13 lastet, erfordert eine vorteilhafte Auslegung des hydraulischen Aufzugs für höhere Drücke P_{Z} und P_{S} zugleich, daß die Pumpe 13 diesem Druck standhält. Um also vorteilhaft den hydraulischen Aufzug für höhere Drücke P_{Z} und P_{S} auslegen zu können, ist eine besondere Bauart der Pumpe 13 erforderlich. Eine solche besondere Bauart der Pumpe 13, durch die die vorteilhafte Auslegung möglich wird, ist in der Fig. 2 in einer schematischen Zeichnung gezeigt.

Innerhalb eines Gehäuses 40 der Pumpe 13 ist eine Welle 41 vorhanden, die der Pumpe 13 und dem Motor 14 (Fig. 1) gemeinsam ist. Die Welle 41 ist umgeben von einer ersten Wellendichtung 42 und - in einem Abstand davon - von einer zweiten Wellendichtung 43. Aus dem Innenraum der Pumpe 13 führt eine erste Bohrung 44 zur Leckageleitung 30, in der das hier nicht dargestellte Leckage-Absperrventil 31 (Fig. 1) angeordnet ist. Aus dem die Welle 41 umgebenden Raum zwischen den beiden Wellendichtungen 42 und 43 führt eine Entlastungsbohrung 45 aus dem Gehäuse 40 heraus, an die eine Restleckleitung 46 angeschlossen ist, die zum Tank 21 führt.

Bei geöffnetem Leckage-Absperrventil 31 (Fig. 1), also immer dann, wenn die Pumpe 13 läuft, kann das Lecköl aus dem Innenraum der Pumpe 13 zum Tank 21 abfließen. Der sich um die Welle 41 vor der ersten Wellendichtung 42 aufbauende Druck ist folglich nur sehr klein, so daß diese erste Wellendichtung 42 nur gering belastet ist.

Wird hingegen, wie zuvor beschrieben, beim Stillstand der Pumpe 13 das Leckage-Absperrventil 31 (Fig. 1) geschlossen, so lastet auf der ersten Wellendichtung 42 der volle Druck P_{S}. Diesem Druck kann die Wellendichtung 42 nicht widerstehen, so daß folglich in den die Welle 41 umgebenden Raum zwischen den Wellendichtungen 42 und 43 eine geringe Menge Hydrauliköl durchtritt. Diese sehr geringe Menge wird durch die Restleckleitung 46 in den Tank 21 abgeführt. Sie ist im Vergleich zu jener Menge des Hydrauliköls, die bei geöffnetem Leckage-Absperrventil 31 (Fig. 1) in den Tank 21 abließt, außerordentlich klein, so daß diese kleine Restleckmenge unbedeutend ist und den Druckspeicher 17 nicht wirklich entlädt. Die Hintereinanderschaltung der beiden Wellendichtungen 42, 43 garantiert, daß kein Hydrauliköl in die Umgebung der Pumpe 13 gelangt. Dem Druck P_{S} wird durch diese beiden Wellendichtungen 42, 43 standgehalten.

Im Ausgangszustand bei Stillstand der Kabine 1 ist, wie schon erwähnt, das Zylinderleitungs-Absperrventil 12 geschlossen und der elektrische Motor 14 der Pumpe 13 steht still. Auf der einen Seite des Zylinderleitungs-Absperrventils 12 herrscht der Druck P_{Z}, auf der anderen Seite der Druck P_{S}. Die Druckdifferenz entspricht, wenn der hydraulische Aufzug wie zuvor beschrieben ausgelegt ist, maximal einem Wert, der der halben Nutzlast der Kabine 1 entspricht. Ist die Kabine 1 mit der halben Nutzlast belastet, ist die Differenz Null. Ist die Kabine 1 leer oder mit weniger als der halben Nennlast belastet, ist der Druck P_{S} größer als der Druck P_{Z}. Ist die Kabine 1 mit mehr als der halben Nennlast belastet, ist der Druck P_{S} kleiner als der Druck P_{Z}. Da die Signale des Druckschalters 22 und des Lastdrucksensors 32 dem Steuer- und Regelgerät 25 zugeführt werden, erkennt also das Steuer- und Regelgerät 25 die jeweilige Lastsituation.

Um zu erreichen, daß beim Öffnen des Zylinderleitungs-Absperrventils 12 keine schlagartige Druckänderung auftritt, kann nun das Steuer- und Regelgerät 25 dafür sorgen, daß zwischen den beiden Anschlüssen des Zylinderleitungs-Absperrventils 12 keine Druckdifferenz herrscht. Das geschieht in der folgenden Weise:

Ist der Druck P_{S} größer als der Druck P_{Z}, so steuert das Steuer- und Regelgerät 25 über den Leistungssteller 24 den Motor 14 der Pumpe 13 so an, daß die Pumpe 13 mit einer sehr geringen Drehgeschwindigkeit in ihrer ersten Drehrichtung läuft, bei der sie Hydrauliköl zur Speicherleitung 16 hin fördert. Da das Zylinderleitungs-Absperrventil 12 geschlossen ist, fördert die Pumpe 13 dabei aber keine nennenswerte Menge an Hydrauliköl. Durch diese langsame Drehung wird aber erreicht, daß der Druck am pumpenseitigen Anschluß des Zylinderleitungs-Absperrventils 12 sinkt. Sobald der Druck gleich groß ist, wie der Druck P_{Z}, liegt über dem Zylinderleitungs-Absperrventil 12 keine Druckdifferenz mehr. Nun kann das Zylinderleitungs-Absperrventil 12 geöffnet werden, ohne daß es zu einer Druckänderung kommt. Der Motor 14 bleibt durch den Leistungssteller 24 zunächst magnetisiert, so daß die Pumpe 13 Drehmoment aufnehmen könnte. Anschließend kann nun bei geöffnetem Zylinderleitungs-Absperrventil 12 die Fahrt der Kabine 1 beginnen, was in bekannter Weise durch Regelung von Drehrichtung und Geschwindigkeit des Motors 14 mit Hilfe des Leistungsstellers 24 erfolgt.

Ist der Druck P_{S} kleiner als der Druck P_{Z}, so steuert das Steuer- und Regelgerät 25 über den Leistungssteller 24 den Motor 14 der Pumpe 13 so an, daß die Pumpe 13 mit einer sehr geringen Drehgeschwindigkeit in ihrer zweiten Drehrichtung läuft, bei der sie Hydrauliköl aus der Speicherleitung 16 heraus in Richtung hydraulischer Antrieb 2 fördert. Da das Zylinderleitungs-Absperrventil 12 geschlossen ist, fördert die Pumpe 13 dabei aber keine nennenswerte Menge an Hydrauliköl. Durch diese langsame Drehung wird aber erreicht, daß der Druck am pumpenseitigen Anschluß des Zylinderleitungs-Absperrventils 12 steigt. Sobald der Druck gleich groß ist, wie der Druck P_{Z}, liegt über dem Zylinderleitungs-Absperrventil 12 keine Druckdifferenz mehr. Nun kann auch in dieser Situation das Zylinderleitungs-Absperrventil 12 geöffnet werden, ohne daß es zu einer Druckänderung kommt. Der Motor 14 bleibt durch den Leistungssteller 24 wiederum zunächst magnetisiert, so daß die Pumpe 13 Drehmoment aufnehmen kann. Anschließend kann nun bei geöffnetem Zylinderleitungs-Absperrventil 12 die Fahrt der Kabine 1 beginnen, was wiederum in bekannter Weise durch Regelung von Drehrichtung und Geschwindigkeit des Motors 14 mit Hilfe des Leistungstellers 24 erfolgt.

Wenn das Leckage-Absperrventil 31 geschlossen ist, liegt an seiner der Pumpe 13 zugewandten Seite der Druck P_{S} an, während auf der dem Tank 21 zugewandten Seite der atmosphärische Druck herrscht, weil der Tank 21 offen ist. Beim Öffnen des Leckage-Absperrventils 31 wird diese Druckdifferenz abgebaut. Überraschenderweise wurde festgestellt, daß dieses Öffnen des Leckage-Absperrventils 31 nicht zu unangenehmen und störenden Schlägen durch den raschen Druckabbau führt. Grund dafür dürfte sein, daß der Druckabbau zwar rasch erfolgt, nicht aber mit einem bedeutsamen Fluß von Hydrauliköl verbunden ist. Wird nämlich das Leckage-Absperrventil 31 geöffnet, kann von der Pumpe 13 her praktisch kein Hydrauliköl nachfließen, weil der innere Widerstand innerhalb der Pumpe 13 in diesem Fall als Drosselstelle wirkt. Somit entspannt sich beim Öffnen des Leckage-Absperrventils 31 lediglich die Menge des Hydrauliköls, die sich zwischen der Pumpe 13 und dem Leckage-Absperrventil 31 befindet. Damit diese Menge klein ist, ist es vorteilhaft, das Leckage-Absperrventil 31 nahe an der Pumpe 13 anzuordnen.

Das zuvor geschilderte Verfahren zur Vorbereitung einer Fahrt der Kabine 1 läuft in gleicher Weise ab, ist also nicht abhängig davon, ob die Kabine 1 danach aufwärts oder abwärts fahren soll.

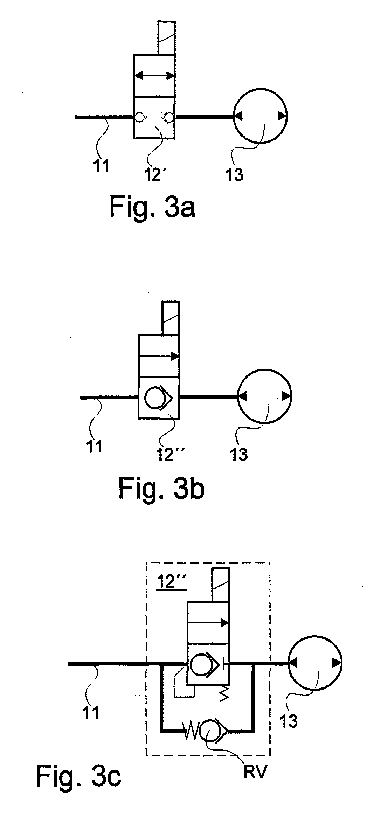

In der Fig. 3 sind drei alternative Lösungen gezeigt, die das Zylinderleitungs-Absperrventil 12 betreffen. Die Fig. 3a zeigt das Zylinderleitungs-Absperrventil 12, durch dessen Symbol ausgesagt ist, daß es sich um ein doppelt sperrendes AUF-ZU-Absperrventil handelt. Durchfluß kann nur dann erreicht werden, wenn das Zylinderleitungs-Absperrventil 12 elektrisch angesteuert wird. Es muß also sowohl für Aufwärts-, als auch für Abwärtsfahrt der Kabine 1 elektrisch angesteuert werden. Diese besondere Ausgestaltung des Zylinderleitungs-Absperrventils 12 ist deshalb als Zylinderleitungs-Absperrventil 12' bezeichnet.

Die Fig. 3b zeigt ein anderes Zylinderleitungs-Absperrventil 12, durch dessen Symbol ausgesagt ist, daß es sich um ein einfach sperrendes AUF-ZU-Absperrventil handelt. Diese alternative Ausführungsform des Zylinderleitungs-Absperrventils 12 ist deshalb als Zylinderleitungs-Absperrventil 12" bezeichnet. Es ist so gestaltet, daß es selbsttätig öffnet, wenn die Pumpe 13 Hydrauliköl in die Zylinderleitung 11 hinein fördert. Sobald die Pumpe 13 nicht fördert, schließt es wieder. Der Fluß von Hydrauliköl von der Zylinderleitung 11 in Richtung Pumpe 13 ist hingegen nur dann möglich, wenn das Zylinderleitungs-Absperrventil 12" elektrisch erregt wird. Im Zylinderleitungs-Absperrventil 12" kann also ein Rückschlagventil integriert sein.

Das Zylinderleitungs-Absperrventil 12" kann alternativ aber auch aus einem AUF-ZU-Ventil und einem parallel geschaltetem Rückschlagventil RV bestehen, wie dies in der Fig. 3c dargestellt ist. Die Gesamtheit von AUF-ZU-Ventil und dem parallel geschalteten Rückschlagventil RV bildet dann das Zylinderleitungs-Absperrventil 12".

Wird ein solches Zylinderleitungs-Absperrventil 12" angewendet, so muß das Zylinderleitungs-Absperrventil 12" dann elektrisch nicht angesteuert werden, wenn die Pumpe 13 Hydrauliköl in Richtung zum hydraulischen Antrieb 2 (Fig. 1) fördert. Das bedeutet insofern einen Vorteil, wenn dann das Zylinderleitungs-Absperrventil 12" automatisch öffnet. Somit kann das zuvor geschilderte Problem einer schlagartigen Druckänderung gar nicht auftreten. Die zuvor beschriebene Prozedur zum Ausgleich der Druckdifferenz vor dem Öffnen des Zylinderleitungs-Absperrventils 12 muß in diesem Fall also gar nicht ablaufen.

Bei der Aufwärtsfahrt der Kabine 1 muß nun das Zylinderleitungs-Absperrventil 12" gar nicht elektrisch angesteuert werden, denn es bleibt selbsttätig offen, solange die Pumpe 13 Hydrauliköl in Richtung-hydraulischer Antrieb 2 fördert. Wird am Ende der Aufwärtsfahrt der Kabine 1 der Motor 14 stillgesetzt, so schließt das Zylinderleitungs-Absperrventil 12'' selbsttätig.

Für hydraulische Aufzüge werden schon beim Stand der Technik Schraubenspindelpumpen 13' verwendet. Obwohl diese keine äußere Leckage aufweisen, hat die Fachwelt die erfindungsgemäße Lösung nicht gefunden.

Bei einem hydraulischen Aufzug gemäß den vorstehend beschriebenen Ausgestaltungen kann aber auch vorteilhaft als Pumpe 13 eine Innenzahnrad-Pumpe angewendet werden, weil diese eine kleine Bauform und einen sehr guten volumetrischen und Gesamtwirkungsgrad aufweisen. Dann sind aber die Maßnahmen nach der alternativen Ausgestaltung der Erfindung, nämlich das Leckage-Absperrventil 31, nötig. Vorteilhaft wird dabei eine Pumpe 13 solcher Bauart angewendet, die eine kleine äußere Leckage aufweist.

Die zuvor gezeigten Ausführungsbeispiele sind mit einer bestimmten Seilanordnung und mit einem Plungerzylinder als hydraulischer Antrieb 2 ausgeführt. Die erfindungsgemäßen Lösungen sind aber, wie eingangs schon erwähnt, hinsichtlich Vorrichtung und Verfahren nicht auf diese Lösungen beschränkt. Sowohl Direktantrieb der Aufzugskabine 1 durch den hydraulischen Antrieb 2 als auch andere Bauarten des hydraulischen Antriebs 2, so auch Zug- oder Druckzylinder wie auch doppelt wirkende Zylinder sind der erfindungsgemäßen und vorteilhaften Ausgestaltung zugänglich.

## Patentansprüche

1. Hydraulischer Aufzug zur Bewegung einer Kabine (1), mit einem Druckspeicher (17), bei dem der Fluß von Hydrauliköl zwischen einem hydraulischen Antrieb (2) durch eine Zylinderleitung (11) und dem Druckspeicher (17) durch eine Speicherleitung (16) mittels einer Pumpe (13) erzeugbar ist, welche von einem Motor (14) antreibbar ist, der aufgrund von Signalen eines Steuer- und Regelgeräts (25) von einem Leistungssteller (24) betrieben wird. und bei dem der Druckspeicher (17) mittels einer von einem Elektromotor (19) angetriebenen Ladepumpe (18), gesteuert von einem Druckschalter (22), mit Hydrauliköl aus einem Tank (21) aufladbar ist, wobei zwischen der zum hydraulischen Antrieb (2) führenden Zylinderleitung (11) und der Pumpe (13) ein Zylinderleitungs-Absperrventil (12, 12', 12") angeordnet ist,
**dadurch gekennzeichnet, daß**
- das Zylinderleitungs-Absperrventil (12, 12', 12") ein elektrisch schaltbares AUF-ZU-Ventil ist, daß
- die Pumpe (13) über die Speicherleitung (16) direkt mit dem Druckspeicher (17) verbunden ist, und daß
- Mittel (30, 31; 13') vorhanden sind, durch die ein Entladen des Druckspeichers (17) beim Stillstand des Aufzugs durch äußere Leckage der Pumpe (13) verhinderbar ist.

2. Hydraulischer Aufzug nach Anspruch 1, **dadurch gekennzeichnet, daß** die Pumpe (13) eine Schraubenspindelpumpe (13') ist.

3. Hydraulischer Aufzug nach Anspruch 1, **dadurch gekennzeichnet, daß**
- von einem Leckage-Anschluß der Pumpe (13) eine Leckageleitung (30) zum Tank (21) führt, und daß
- in der Leckageleitung (30) ein vom Steuer- und Regelgerät (25) ansteuerbares Leckage-Absperrventil (31) angeordnet ist.

4. Hydraulischer Aufzug nach Anspruch 3, **dadurch gekennzeichnet, daß** das Leckage-Absperrventil (31) ein AUF-ZU-Ventil ist.

5. Hydraulischer Aufzug nach Anspruch 3 oder 4, **dadurch gekennzeichnet, daß** die Pumpe (13) neben einer Bohrung (44) zum Anschluß der Leckageleitung (30) eine Entlastungsbohrung (45) aufweist, die zu einem Raum zwischen einer ersten Wellendichtung (42) und einer zweiten Wellendichtung (43) führt, und daß diese Entlastungsbohrung mit einer zum Tank (21) führenden Restleckleitung (46) verbunden ist.

6. Hydraulischer Aufzug nach einem der Ansprüche 3 bis 5, **dadurch gekennzeichnet, daß** daß das Leckage-Absperrventil (31) nahe der Pumpe (13) angeordnet ist.

7. Verfahren zur Steuerung und Regelung eines hydraulischen Aufzugs zur Bewegung einer Kabine (1), mit einem Druckspeicher (17), bei dem der Fluß von Hydrauliköl zwischen einem hydraulischen Antrieb (2) durch eine Zylinderleitung (11) und dem Druckspeicher (17) durch eine Speicherleitung (16) mittels einer Pumpe (13) erzeugbar ist, welche von einem Motor (14) antreibbar ist, der aufgrund von Signalen eines Steuer- und Regelgeräts (25) von einem Leistungssteller (24) betrieben wird, und bei dem der Druckspeicher (17) mittels einer von einem Elektromotor (19) angetriebenen Ladepumpe (18), gesteuert von einem Druckschalter (22), mit Hydrauliköl aus einem Tank (21) aufladbar ist, **dadurch gekennzeichnet, daß** ein zwischen einem Leckage-Anschluß der Pumpe (13) und dem Tank (21) in einer Leckageleitung (30) angeordnetes, vom Steuer- und Regelgerät (25) ansteuerbares Leckage-Absperrventil (31) bei Stillstand des Aufzugs geschlossen ist, und daß das Leckage-Absperrventil (31) geöffnet wird, sobald die Pumpe (13) läuft.

## Claims

1. Hydraulic elevator for moving a car (1), with a pressure accumulator (17), in which elevator the flow of hydraulic oil between a hydraulic drive (2) and the pressure accumulator (17) through a cylinder line (11) and an accumulator line (16) can be produced by a pump (13), which can be driven by a motor (14), which is operated by a power regulating unit (24) on the basis of signals from a control/automatic regulation unit (25), in which a cylinder line stop valve (12, 12', 12") is installed between the cylinder line (11), which leads to the hydraulic drive (2), and the pump (13), and in which elevator the pressure accumulator (17) can be charged with hydraulic oil from a tank (21) by a charging pump (18) driven by an electric motor (19), which is controlled by a pressure switch (22), **characterized by** the fact that
- the cylinder line stop valve (12, 12', 12") is an electrically switchable on-off valve, that
- the pump (13) is directly connected with the pressure accumulator (17) by the accumulator line (16), and that
- means (30, 31; 13') are provided, by which discharging of the pressure accumulator (17) as a result of external leakage of the pump (13) can be prevented.

2. Hydraulic elevator in accordance with Claim 1, **characterized by** the fact that the pump (13) is a screw pump (13').

3. Hydraulic elevator in accordance with Claim 1, **characterized by** the fact that
- a leakage line (30) leads to the tank (21) from a leakage connection of the pump (13), and that
- a leakage stop valve (31), which can be controlled by the control/automatic regulation unit (25), is installed in the leakage line (30).

4. Hydraulic elevator in accordance with Claim 3, **characterized by** the fact that the leakage stop valve (31) is an on-off valve.

5. Hydraulic elevator in accordance with Claim 3 or Claim 4, **characterized by** the fact that, in addition to a bore (44) for connection of the leakage line (30), the pump (13) has a relief bore (45), which leads to a space between a first shaft packing (42) and a second shaft packing (43), and that this relief bore (45) is connected with a residual leakage line (46) that leads to the tank (21).

6. Hydraulic elevator in accordance with any of Claims 3 to 5, **characterized by** the fact that the leakage stop valve (31) is installed near the pump (13).

7. Method for controlling and automatically regulating a hydraulic elevator for moving a car (1), with a pressure accumulator (17), in which method the flow of hydraulic oil between a hydraulic drive (2) and the pressure accumulator (17) through a cylinder line (11) and an accumulator line (16) can be produced by a pump (13), which can be driven by a motor (14), which is operated by a power regulating unit (24) on the basis of signals from a control/automatic regulation unit (25), and in which method the pressure accumulator (17) can be charged with hydraulic oil from a tank (21) by a charging pump (18) driven by an electric motor (19), which is controlled by a pressure switch (22), **characterized by** the fact that a leakage stop valve (31), which is installed in a leakage line (30) between a leakage connection of the pump (13) and the tank (21) and is controlled by the control/automatic regulation unit (25), is closed when the elevator is stopped, and that the leakage stop valve (31) is opened as soon as the pump (13) starts to run.

## Revendications

1. Ascenseur hydraulique à déplacer une cabine (1), à un accumulateur hydraulique (17), dans lequel l'écoulement de l'huile hydraulique peut s'établir entre un mécanisme de commande hydraulique (2) par un conduit de cylindre (11) et ledit accumulateur hydraulique (17) par un conduit d'accumulateur (16) moyennant une pompe (13), qui est apte à être entraînée moyennant un moteur (14), commandé par un organe de réglage (24) en réponse aux signaux d'un dispositif de commande et de réglage (25), et dans lequel ledit accumulateur hydraulique (17) est apte à être chargé de l'huile hydraulique à partir d'un réservoir (21), moyennant une pompe de chargement (18) entraînée par un moteur électrique (19) sous la commande d'un interrupteur à pression (22), à une soupape d'arrêt du conduit de cylindre (12, 12', 12") étant disposée entre ledit conduit de cylindre (11), qui s'étend vers ledit mécanisme de commande hydraulique (2), et ladite pompe (13),
**caractérisé en ce que**
- ladite soupape d'arrêt du conduit de cylindre (12, 12', 12") est une soupape du type OUVERT/FERME apte à être commutée de manière électrique,
- **en ce que** ladite pompe (13) est raccordé via ledit conduit d'accumulateur (16) directement audit accumulateur hydraulique (17), et
- **en ce que** des moyens (30, 31 ; 13') sont disposées, qui servent à empêcher un déchargement dudit accumulateur hydraulique (17) en vertu d'une fuite extérieure de ladite pompe (13), au temps d'arrêt de l'ascenseur.

2. Ascenseur hydraulique selon la revendication 1, **caractérisé en ce que** ladite pompe (13) est une pompe à broche hélicoïdale (13').

3. Ascenseur hydraulique selon la revendication 1, **caractérisé en ce**
- **qu'**un conduite de fuite (30) s'étend à partir d'un raccord de fuite de ladite pompe (13) audit réservoir (21), et en ce
- **qu'**une soupape d'arrêt de fuite (31) est disposée dans ledit conduit de fuite (30), qui est commandable par ledit dispositif de commande et de réglage (25).

4. Ascenseur hydraulique selon la revendication 3, **caractérisé en ce que** ladite soupape d'arrêt de fuite (31) est une soupape du type OUVERT/FERME.

5. Ascenseur hydraulique selon la revendication 3 ou 4, **caractérisé en ce que** ladite pompe (13) comprend, au plus d'un alésage (44) pour le raccordement dudit conduit de fuite (30), un alésage de décharge (45), qui s'étend à un espace entre une première garniture étanche de l'arbre (42) et une deuxième garniture étanche de l'arbre (43), et **en ce que** cet alésage de décharge est raccordé à un conduit de fuite résiduelle (46), qui passe audit réservoir (21).

6. Ascenseur hydraulique selon une quelconque des revendications 3 à 5, **caractérisé en ce que** ladite soupape d'arrêt de fuite (31) est disposée au voisinage de ladite pompe (13).

7. Procédé à commander et régler un ascenseur hydraulique à déplacer une cabine (1), à un accumulateur hydraulique (17), dans lequel l'écoulement de l'huile hydraulique peut s'établir entre un mécanisme de commande hydraulique (2) par un conduit de cylindre (11) et ledit accumulateur hydraulique (17) par un conduit d'accumulateur (16) moyennant une pompe (13), qui est apte à être entraînée moyennant un moteur (14), commandé par un organe de réglage (24) en réponse aux signaux d'un dispositif de commande et de réglage (25), et dans lequel ledit accumulateur hydraulique (17) est apte à être chargé de l'huile hydraulique à partir d'un réservoir (21), moyennant une pompe de chargement (18) entraînée par un moteur électrique (19) sous la commande d'un interrupteur à pression (22), **caractérisé en ce qu'**une soupape d'arrêt de fuite (31), qui est disposé entre un raccord de fuite de ladite pompe (13) et ledit réservoir (21) dans un conduit de fuite (30), est fermée au temps d'arrêt de l'ascenseur, et **en ce que** ladite soupape d'arrêt de fuite (31) s'ouvre dès que la pompe (13) est en marche.
